# EUROPEAN PATENT APPLICATION

(11) **EP 4 755 802 A2**
(43) Date of publication of application: **10.06.2026**
(21) Application number: 26172755.6
(22) Date of filing: 14.12.2023
(51) Int. Cl.: B64D 37/32

(54) **HYDROGEN AIRCRAFT AND METHOD FOR COOLING PIPING FOR HYDROGEN AIRCRAFT**

(30) Priority: 27.12.2022 US 202263435365 P
(62) Divisional of application: 23911766.6
(71) Applicant: KAWASAKI JUKOGYO KABUSHIKI KAISHA, Kobe-shi, Hyogo 650-8670 (JP)
(72) Inventor: TSURU, Kazunari, Hyogo, 650-8670 (JP); Sazaki, Koichi, Hyogo, 650-8670 (JP); SHIMIZU, Kazuko, Hyogo, 650-8670 (JP); TANAKA, Shota, Hyogo, 650-8670 (JP)
(74) Representative: Leinweber & Zimmermann

(57) **Abstract**

A hydrogen aircraft utilizes hydrogen as fuel for a power unit. The hydrogen aircraft includes target piping and a cooling device. The target piping is piping for transportation of liquid hydrogen, and has a stagnation period during which liquid hydrogen does not substantially flow while the hydrogen aircraft is in operation. The cooling device cools the target piping.

## Description

### Technical Field

The present disclosure relates to a hydrogen aircraft using hydrogen as fuel for a power unit, and a method for cooling piping for transportation of liquid hydrogen in the hydrogen aircraft.

### Background Art

An aircraft includes a lot of piping that constructs a fuel supply system. Some parts of the piping are not always used. For example, an aircraft including a plurality of fuel tanks includes crossfeed piping in order to suppress an imbalance of stored fuel among the tanks (for example, Patent Literature 1). At least a part of the crossfeed piping is used only at the time of correcting the imbalance of fuel or at the time of a failure of one tank.

A hydrogen aircraft that flies using hydrogen as fuel of the power unit is known. Also in the hydrogen aircraft, a plurality of tanks for storing liquid hydrogen is desirably mounted on an airframe and crossfeed piping is provided. The piping through which the liquid hydrogen constantly circulates is cooled by coolness of the liquid hydrogen to be transported. However, for example, in piping where the circulation of liquid hydrogen is limited only when necessary, the liquid hydrogen in the piping stagnates, and the temperature of the piping eventually rises with time. When liquid hydrogen is allowed to flow through the piping in this state, the liquid hydrogen in the piping boils, and this may hinder normal fuel supply.

### Citation List

### Patent Literature

Patent Literature 1: JP 2010-506795 T

### Summary of Invention

An object of the present disclosure is to provide a hydrogen aircraft capable of stably supplying fuel, and a method for cooling piping used in the hydrogen aircraft.

A hydrogen aircraft according to one aspect of the present disclosure is a hydrogen aircraft utilizing hydrogen as fuel for a power unit, the hydrogen aircraft including target piping for transportation of liquid hydrogen, the target piping having a stagnation period during which liquid hydrogen does not substantially flow while the hydrogen aircraft is in operation, and a cooling device that cools the target piping.

A method for cooling piping according to another aspect of the present disclosure is a method for cooling target piping for transportation of liquid hydrogen, the target piping being included in a hydrogen aircraft utilizing hydrogen as fuel for a power unit, the method including specifying a stagnation period during which liquid hydrogen does not substantially flow in the target piping while the hydrogen aircraft is in operation and supplying liquid hydrogen for cooling to the target piping at predetermined time intervals for a predetermined period during the stagnation period.

### Brief Description of the Drawings

FIG. 1 is a diagram schematically illustrating a configuration of a hydrogen aircraft according to an embodiment of the present disclosure.
FIG. 2 is a block diagram illustrating a configuration of a fuel supply system of the hydrogen aircraft.
FIG. 3 is a block diagram illustrating a cooling device according to a first embodiment.
FIG. 4 is a time chart illustrating control example of the cooling device according to the first embodiment.
FIG. 5 is a flowchart illustrating an example of cooling control of crossfeed piping performed by the cooling device according to the first embodiment.
FIG. 6 is a flowchart illustrating an example of the cooling control of the crossfeed piping performed by the cooling device according to the first embodiment.
FIG. 7 is a block diagram illustrating a cooling device according to a second embodiment.
FIG. 8 is a block diagram illustrating a cooling device according to a third embodiment.
FIG. 9 is a schematic diagram illustrating a modification of the third embodiment.
FIG. 10 is a block diagram illustrating a cooling device according to a fourth embodiment.

### Description of Embodiments

Embodiments of a hydrogen aircraft and a method for cooling piping according to the present disclosure will be described in detail below with reference to the drawings. A hydrogen aircraft of the present disclosure flies using hydrogen as an energy source. In the hydrogen aircraft, piping is a pipe line for supply of gaseous hydrogen or liquid hydrogen as fuel to a power unit of the hydrogen aircraft. The hydrogen aircraft may be used for either passenger or cargo. The power unit is not limited as long as hydrogen is used as an energy source. The power unit includes a main power unit such as a propulsion system related to navigation of the hydrogen aircraft, and an auxiliary power unit (APU). The propulsion system may be, for example, a hydrogen combustion gas turbine engine, an electric propulsive device configured by a combination of a fuel cell and an electric motor, or a hybrid propulsive device of the gas turbine engine and the electric propulsive device.

### [Outline of hydrogen aircraft]

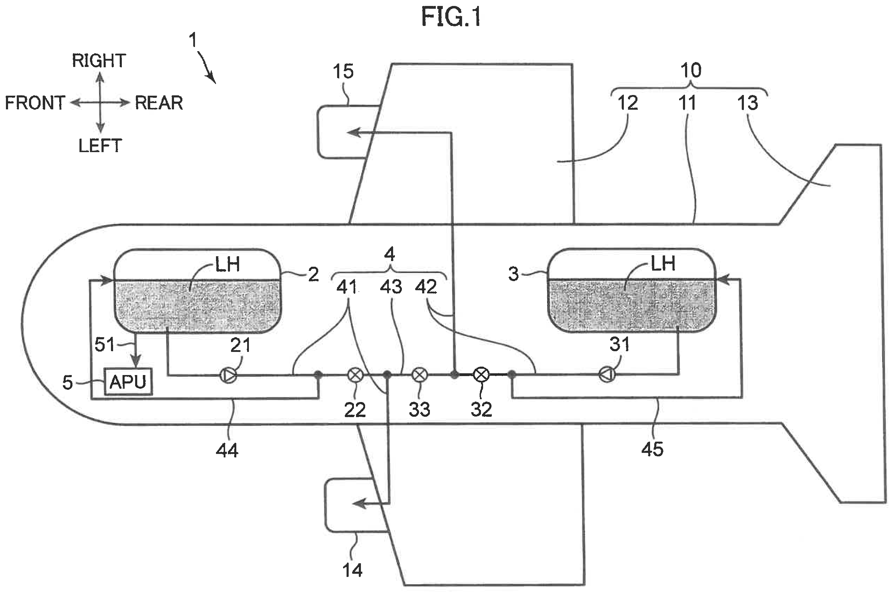

FIG. 1 is a diagram schematically illustrating a configuration of a hydrogen aircraft 1 according to embodiments of the present disclosure. The hydrogen aircraft 1 includes an airframe 10, a first engine 14 and a second engine 15 as propulsion systems, a first tank 2 and a second tank 3 storing fuel, supply piping 4, and an APU 5. In the present embodiment, as an example, in which the hydrogen aircraft 1 includes two fuel storage tanks is described. The hydrogen aircraft 1 may include three or more fuel storage tanks.

The airframe 10 includes a fuselage 11, a pair of right and left main wings 12, and an empennage 13. The fuselage 11 includes structural members such as a circular frame and a stringer, and a fuselage panel assembled in a cylindrical shape. The right and left main wings 12 include a spar and a flap, and extends laterally from the fuselage 11. The empennage 13 is at the rear end of the fuselage 11 and includes a vertical empennage and a horizontal empennage. The first engine 14 and the second engine 15 are, for example, hydrogen combustion gas turbine engines that use liquid hydrogen as fuel. The first engine 14 is fixed to the left main wing 12, and the second engine 15 is fixed to the right main wing 12.

The first tank 2 and the second tank 3 are tanks storing liquid hydrogen to be fuel for the first engine 14 and the second engine 15. The first tank 2 is disposed in a housing section provided at a front part of the airframe 10. The second tank 3 is disposed in a housing section provided at a rear part of the airframe 10. The disposing positions of the two tanks 2 and 3 are not limited, and the tanks 2 and 3 may be disposed in any position of the airframe 10. As in the present embodiment, if the two tanks 2 and 3 are disposed on the front portion and rear portion of the airframe 10, the weight of the hydrogen aircraft 1 is easily balanced. The first tank 2 and the second tank 3 have heat insulation performance with respect to the outside. In the present embodiment, the first tank 2 and the second tank 3 have a vacuum double shell structure.

The supply piping 4 is piping for transporting liquid hydrogen. The supply piping 4 interconnects the first tank 2 and the second tank 3 with the first engine 14 and the second engine 15. The supply piping 4 includes first supply piping 41, second supply piping 42, and crossfeed piping 43. The first supply piping 41 is piping for supplying liquid hydrogen from the first tank 2 to the first engine 14. The second supply piping 42 is piping for supplying liquid hydrogen from the second tank 3 to the second engine 15. The crossfeed piping 43 is communication piping for allowing the first supply piping 41 and the second supply piping 42 to communicate with each other. In the following description about various piping, "upstream" and "downstream" relative to the direction where liquid hydrogen flows through the piping are used.

A first booster pump 21 and a first valve 22 are disposed in the first supply piping 41. A second booster pump 31 and a second valve 32 are disposed in the second supply piping 42. A crossfeed valve 33 is disposed in the crossfeed piping 43. The first booster pump 21 boosts the pressure of the liquid hydrogen stored in the first tank 2 to a predetermined pressure and sends the liquid hydrogen downstream of the first supply piping 41. The second booster pump 31 boosts the pressure of the liquid hydrogen stored in the second tank 3 to a predetermined pressure and sends the liquid hydrogen downstream of the second supply piping 42. The first valve 22, the second valve 32, and the crossfeed valve 33 are, for example, shut-off valves that block or allow passage of liquid hydrogen through the piping. Alternatively, the second valve 32 and the crossfeed valve 33 are regulating valves capable of regulating a flow rate. Note that in order to make the fuel supply path redundant, the first supply piping 41 and the second supply piping 42 are desirably parallel piping of two or more paths, and a booster pump and a valve are disposed in each path.

First return piping 44 and second return piping 45 are disposed in the airframe 10. The first return piping 44 branches from the first supply piping 41 between the first booster pump 21 and the first valve 22 and is connected to the first tank 2. The second return piping 45 branches from the second supply piping 42 between the second booster pump 31 and the second valve 32 and is connected to the second tank 3. The first return piping 44 is piping for returning, to the first tank 2, liquid hydrogen sent from the booster pump 21 in excess of the consumption amount in the first engine 14. The second return piping 45 is piping for returning, to the second tank 3, liquid hydrogen sent from the booster pump 31 in excess of the consumption amount in the second engine 15.

The APU 5 generates power for starting the engines 14 and 15. The APU 5 also generates power such as bleed air and electric power during parking of the hydrogen aircraft 1. As the APU 5, for example, a small hydrogen combustion gas turbine engine using liquid hydrogen as fuel is used. FIG. 1 illustrates an example in which liquid hydrogen is supplied from the first tank 2 to the APU 5 through the APU supply piping 51.

### [Fuel supply system of hydrogen aircraft]

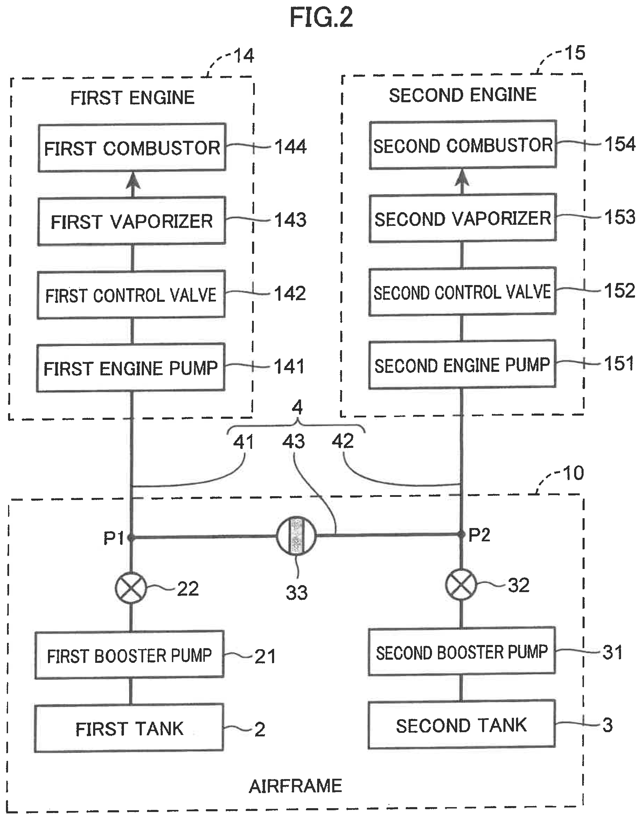

FIG. 2 is a block diagram illustrating a configuration of a fuel supply system of the hydrogen aircraft. The first engine 14 includes a first engine pump 141, a first control valve 142, a first vaporizer 143, and a first combustor 144. The first engine pump 141 boosts pressure of the liquid hydrogen sent from the first booster pump 21 and sends the liquid hydrogen toward the first combustor 144. The first control valve 142 supplies liquid hydrogen depending on the required fuel amount for the first engine 14 to the first combustor 144. The required fuel amount for the first engine 14 is determined by, for example, a required rotation speed of the first engine 14. The first vaporizer 143 vaporizes the liquid hydrogen supplied from the first control valve 142. The first combustor 144 burns hydrogen supplied from the first vaporizer 143 and generates power for propulsion of the hydrogen aircraft 1. The second engine 15 includes a second engine pump 151, a second control valve 152, a second vaporizer 153, and a second combustor 154. The functions of these devices are similar to the functions of the first engine pump 141, the first control valve 142, the first vaporizer 143, and the first combustor 144 in the first engine 14.

In normal fuel supply, the liquid hydrogen in the first tank 2 is supplied to the first engine 14 via the first supply piping 41. Further, the liquid hydrogen in the second tank 3 is supplied to the second engine 15 via the second supply piping 42. That is, the first valve 22 and the second valve 32 are opened, and the crossfeed valve 33 is closed. That is, the fuel is not transported via the crossfeed piping 43.

In the hydrogen aircraft 1, the balance of the fuel weight between the first tank 2 and the second tank 3 has to be assumed to be lost. The first tank 2 is disposed on the front portion of the airframe 10, and the second tank 3 is disposed on the rear portion of the airframe 10. In a case where the weights of the tanks 2 and 3 are relatively greatly different from each other, the center of gravity of the airframe 10 is biased toward the front side or the rear side, which may adversely affect the navigation of the hydrogen aircraft 1. As described above, in a case where the weight balance of the tanks in the airframe is greatly lost, the fuel is transported via the crossfeed piping 43 instead of a normal fuel supply system.

For example, the case is assumed in which the fuel weight of the first tank 2 is reduced more than the fuel weight of the second tank 3. In this case, the liquid hydrogen in the second tank 3 is supplied to both the first engine 14 and the second engine 15 using the crossfeed piping 43. That is, the first valve 22 is closed, and the second valve 32 and the crossfeed valve 33 are opened. The fuel transportation using the crossfeed piping 43 is continued until imbalance of the fuel weight between the first tank 2 and the second tank 3 is corrected. After the correction, the crossfeed valve 33 is closed, and the transportation of the liquid hydrogen via the crossfeed piping 43 is stopped. Further, the closed first valve 22 is opened. Also in a case where fuel supply from either the first tank 2 or the second tank 3 is disabled due to a device failure or the like, the fuel transportation using the crossfeed piping 43 is performed in the same manner as described above.

The supply piping 4 includes piping such as the crossfeed piping 43 having a stagnation period during which liquid hydrogen does not substantially flow during navigation of the hydrogen aircraft 1. In addition to the supply piping 4, for example, there exists piping such as the APU supply piping 51 where liquid hydrogen flows only during a period in which the APU 5 operates and liquid hydrogen does not flow during navigation. As described above, the transport piping for liquid hydrogen disposed in the airframe 10 include stagnation piping where liquid hydrogen does not substantially flow while the hydrogen aircraft 1 is in operation. Here, "in operation" means a period during which main power units operated by hydrogen, such as main power units such as the engines 14 and 15 or an auxiliary power unit such as the APU 5 are operated. In addition, the phrase "does not substantially flow" includes not only a case where the flow of liquid hydrogen in the hydrogen transport piping is stopped and the liquid hydrogen is stagnated in the piping, but also a case where a flow rate is significantly lower than the original transportation flow rate of liquid hydrogen.

The hydrogen transport piping is maintained at a low temperature by the coolness of the liquid hydrogen to be transported during operation. However, in the piping such as the crossfeed piping 43 and the APU supply piping 51, the piping temperature may rise due to heat input from the outside for the stagnation period during which liquid hydrogen does not flow. Even if the piping is covered with a heat insulating material, the heat input to the piping cannot be completely prevented. When liquid hydrogen flows through the hydrogen transportation piping that is not maintained at a low temperature, the liquid hydrogen partially or entirely evaporates. For example, when liquid hydrogen flows through the crossfeed piping 43 whose temperature has risen due to stagnation of the liquid hydrogen, a fluid containing a gas phase portion is sent to the first engine pump 141 or the second engine pump 151. Since the engine pumps 141 and 151 are pumps for feeding liquid, if the gas phase portion is mixed, a pump's original feeding function is inhibited. That is, the normal fuel supply to the engines 14 and 15 is hindered.

In view of the above problems, in the present embodiment, the hydrogen aircraft 1 includes a cooling device that sets hydrogen transportation piping having the stagnation period during which liquid hydrogen does not flow as cooling target piping and cools the target piping for the stagnation period. Examples of the target piping include, in addition to the above-mentioned crossfeed piping 43 and APU supply piping 51, communication piping for communication among a plurality of hydrogen storage tanks, preliminary piping for redundancy, and bypass piping for transporting liquid hydrogen while bypassing a specific device. Examples of a cooling mode of the cooling device include a mode in which liquid hydrogen is supplied to the target piping for the stagnation period to internally cool the target piping, and a mode in which the target piping is externally cooled.

An example of a method for internally cooling the piping includes a method for supplying liquid hydrogen for cooling to the target piping at predetermined time intervals only for a predetermined period during the stagnation period. Alternatively, a small amount of liquid hydrogen may be allowed to constantly flow through the target piping. The small amount is about 1% to 20% of the maximum supply amount to the power unit or the like that is the supply destination of the liquid hydrogen. An example of the method for externally cooling the piping includes a method for providing the target piping in a refrigerator or a method for additionally installing cooling piping to the target piping to perform heat exchange. Hereinafter, a specific example of the cooling device will be described.

### [First embodiment]

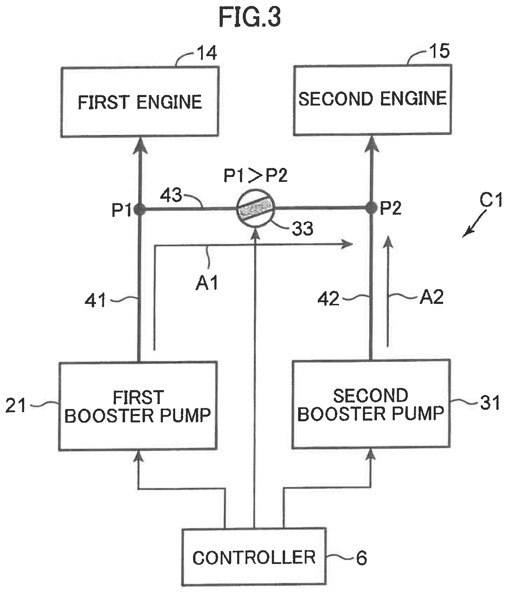

FIG. 3 is a block diagram illustrating a cooling device C1 according to a first embodiment. In the first embodiment, piping to be cooled is the crossfeed piping 43. The cooling device C1 of the first embodiment includes the first booster pump 21, the second booster pump 31, the crossfeed piping 43, the crossfeed valve 33, and a controller 6. The first booster pump 21, the second booster pump 31, and the crossfeed valve 33 function as a supply device that supplies liquid hydrogen stored in the first tank 2 or the second tank 3 to the crossfeed piping 43 at a predetermined flow rate. The controller 6 is a control device that performs output control of the booster pumps 21 and 31 and opening degree control of the crossfeed valve 33.

During the stagnation period of the crossfeed piping 43, the controller 6 opens the crossfeed valve 33. As a result, the controller 6 supplies the liquid hydrogen to the crossfeed piping 43 to cool the crossfeed piping. In a case where the first booster pump 21 and the second booster pump 31 feed liquid hydrogen at the same output, the liquid hydrogen in the crossfeed piping 43 does not flow and stagnates even if the crossfeed valve 33 is opened. This is because pressure P1 at the branch portion of the crossfeed piping 43 in the first supply piping 41 is substantially equal to pressure P2 at the branch portion of the crossfeed piping 43 in the second supply piping 42.

The controller 6 controls the first booster pump 21 and the second booster pump 31 so that a pressure difference is generated between the pressure P1 and the pressure P2. For example, in a case where the first booster pump 21 and the second booster pump 31 are rotary pumps, a difference is provided in discharge pressure of the pumps by making the rotation speeds of the pumps different from each other. In FIG. 3, P1 > P2 holds by setting the discharge pressure of the first booster pump 21 to be higher than the discharge pressure of the second booster pump 31. With this control, as indicated by an arrow A1, the liquid hydrogen discharged from the first tank 2 by the operation of the first booster pump 21 is partially supplied to the crossfeed piping 43 through the first supply piping 41. The liquid hydrogen remaining in the first supply piping 41 is supplied to the first engine 14. The liquid hydrogen discharged from the second tank 3 by the second booster pump 31 indicated by an arrow A2 is supplied to the second engine 15 together with the liquid hydrogen in the path indicated by the arrow A1.

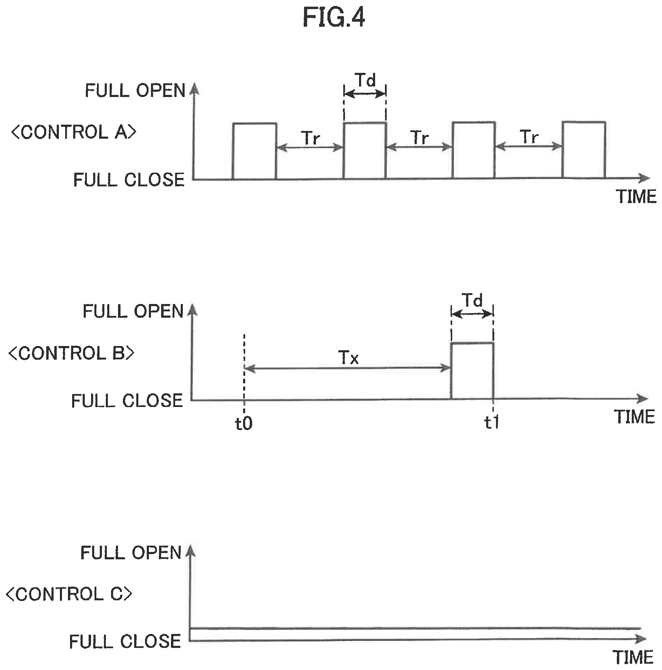

FIG. 4 is a time chart illustrating a control example using the cooling device C1 according to the first embodiment. FIG. 4 illustrates three control examples for cooling the crossfeed piping 43.; control A, control B, and control C. The control A and control B are examples in which liquid hydrogen for cooling is supplied to the crossfeed piping 43 at predetermined time intervals only for a predetermined period while the crossfeed is not performed. In the control A, liquid hydrogen is supplied to the crossfeed piping 43 at predetermined intervals. In the control B, the liquid hydrogen is supplied to the crossfeed piping 43 when a period during which the liquid hydrogen stagnates in the crossfeed piping 43 continues for a predetermined period. In the control C, a small amount of liquid hydrogen is constantly supplied to the crossfeed piping 43.

In the control A, the controller 6 repeats start and stop of supply of liquid hydrogen to the crossfeed piping 43 at predetermined time intervals Tr for the stagnation period of the crossfeed piping 43. Specifically, the controller 6 controls the first booster pump 21 and the second booster pump 31 so that a difference is generated between the pressure P1 and the pressure P2 only for a predetermined supply period Td. For example, in a case where the storage amount of the liquid hydrogen in the first tank 2 is larger than that in the second tank, the controller 6 sets a relationship of P1 > P2 and supplies the liquid hydrogen in the first tank 2 to the crossfeed piping 43. For example, the controller 6 fully opens the crossfeed valve 33 and regulates the flow rate of the liquid hydrogen at a ratio of P1: P2. Alternatively, the controller 6 may regulate the flow rate of the liquid hydrogen by regulating the opening degree of the crossfeed valve 33. As another modification, piping that bypasses the crossfeed valve 33 may be disposed to circulate liquid hydrogen.

The supply of the liquid hydrogen cools the crossfeed piping 43. When the supply period Td has elapsed, the supply of the liquid hydrogen is temporarily stopped. When a certain time interval Tr elapses after the supply of the liquid hydrogen is stopped, the liquid hydrogen is supplied to the crossfeed piping 43 again for the supply period Td. Thereafter, the similar operation is repeated while the stagnation period of the crossfeed piping 43 is continued. According to the control A, liquid hydrogen is periodically supplied to the crossfeed piping 43 in the stagnating state. Therefore, the crossfeed piping 43 can be reliably cooled.

In the control B, the controller 6 supplies liquid hydrogen to the crossfeed piping 43 when liquid hydrogen stagnates for a predetermined period in the crossfeed piping 43. The time at which the circulation of liquid hydrogen to the crossfeed piping 43 is finished is defined as t0. The liquid hydrogen continues to stagnate in the crossfeed piping 43 for a predetermined stagnation period Tx from time t0.

In this case, the controller 6 starts supply of liquid hydrogen to the crossfeed piping 43 when the stagnation period Tx has elapsed. The controller 6 continues the supply of liquid hydrogen for the predetermined supply period Td. The controller 6 starts counting a new stagnation period Tx from the time t1 at which the supply period Td expires. According to the control B, the liquid hydrogen is supplied to the crossfeed piping 43 at a stage where the liquid hydrogen continues stagnating in the crossfeed piping 43 and cooling is actually required. Conversely, liquid hydrogen is not supplied to the crossfeed piping 43 at a stage where cooling is not required. Therefore, the liquid hydrogen stored in the first tank 2 or the second tank 3 can be efficiently used.

In the control C, the controller 6 opens the crossfeed valve 33 during the stagnation period of the crossfeed piping 43, and controls the discharge pressure of the first booster pump 21 and the second booster pump 31 so that a pressure difference is generated between the pressure P1 and the pressure P2. As a result, the controller 6 constantly supplies a small amount of the liquid hydrogen to the crossfeed piping 43. The "small amount" means a flow rate sufficiently smaller than the flow rate in a case where a crossfeed operation is performed using the crossfeed valve 33. FIG. 4 illustrates an example in which the controller 6 reduces the opening degree of the crossfeed valve 33 to reduce the amount of liquid hydrogen flowing through the crossfeed piping 43. The controller 6 may cause a small amount of liquid hydrogen to flow through the crossfeed piping 43 by setting the ratio of P1: P2 to a value close to 1. According to the control C, when the crossfeed piping 43 is in the stagnation state, a small amount of liquid hydrogen constantly flows in the crossfeed piping 43. Therefore, the crossfeed piping 43 can be reliably cooled.

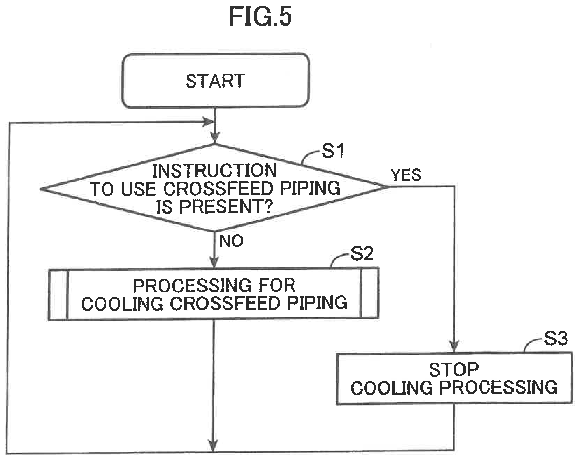

FIG. 5 is a flowchart illustrating an example of the cooling control of the crossfeed piping 43 in a case where the controller 6 of the cooling device C1 in the first embodiment performs the control A of FIG. 4. The controller 6 determines whether use of the crossfeed piping 43 is requested while the hydrogen aircraft 1 is in operation (step S1).

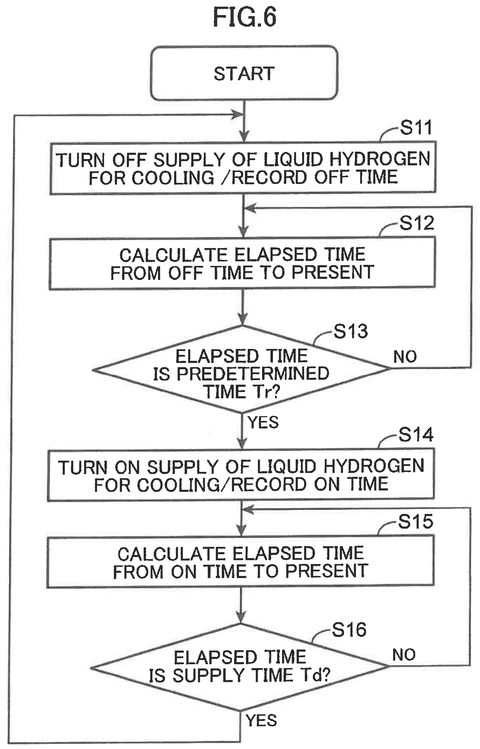

In a case where the fuel weight balance between the first tank 2 and the second tank 3 is not lost, or a failure of the device is not present, and the use of the crossfeed piping 43 is not requested (NO in step S1), the controller 6 executes cooling processing on the crossfeed piping 43 illustrated in FIG. 6 (step S2). In a case where the use of the crossfeed piping 43 is requested (YES in step S1), the crossfeed piping 43 is cooled by circulating liquid hydrogen, and thus the cooling processing is not executed. In a case where the cooling processing is currently executed, the cooling processing is stopped (step S3).

FIG. 6 is a flowchart illustrating an example of the cooling processing in step S2 of FIG. 5. At the start of the processing of FIG. 6, liquid hydrogen for cooling is supplied to the crossfeed piping 43. That is, the time within the supply period Td of the control A illustrated in FIG. 4 is the start time. When one supply period Td ends, the controller 6 performs control for turning off the supply of liquid hydrogen for cooling to the crossfeed piping 43 (step S11). Specifically, the controller 6 closes the crossfeed valve 33 and controls the discharge pressure of the first booster pump 21 and the discharge pressure of the second booster pump 31 so that the pressure P1 and the pressure P2 are equal to each other.

Next, the controller 6 acquires a current time, and calculates an elapsed time from a supply OFF time of the liquid hydrogen to the present (step S12). The controller 6 determines whether the calculated elapsed time has reached the predetermined time Tr set as an interval (step S13). In a case where the calculated elapsed time has not reached the predetermined time Tr (NO in step S13), the processing returns to step S12.

In a case where the calculated elapsed time has reached the predetermined time Tr (YES in step S13), the controller 6 starts supplying liquid hydrogen to the crossfeed piping 43 in order to cool the crossfeed piping 43. Specifically, the controller 6 opens the crossfeed valve 33 and controls the discharge pressure of the first booster pump 21 and the discharge pressure of the second booster pump 31 so that a pressure difference is generated between the pressure P1 and the pressure P2. At the same time, the controller 6 records the ON time at which the supply of the liquid hydrogen is started (step S14).

Next, the controller 6 acquires a current time, and calculates an elapsed time from a supply ON time of the liquid hydrogen to the present (step S15). The controller 6 determines whether the calculated elapsed time has reached the supply period Td set as the supply ON time (step S16). In a case where the supply period Td has not expired (NO in step S16), the processing returns to step S15. In a case where the supply period Td has expired (YES in step S16), the controller 6 returns to step S11 and turns off the supply of liquid hydrogen for cooling to the crossfeed piping 43. Thereafter, the same processing is repeated until crossfeed is requested.

### [Second embodiment]

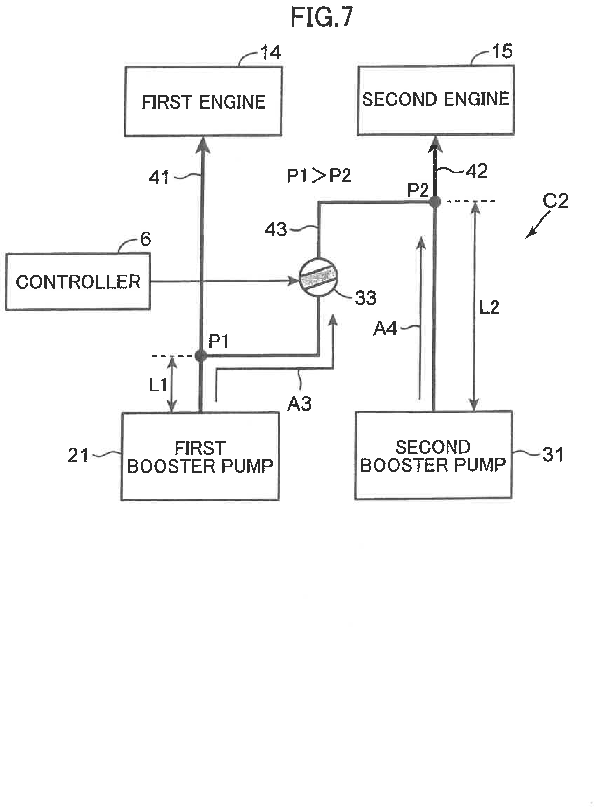

FIG. 7 is a block diagram illustrating a cooling device C2 according to a second embodiment. In the second embodiment, piping to be cooled is crossfeed piping 43. The cooling device C2 includes a first booster pump 21, a second booster pump 31, a controller 6, the crossfeed piping 43, and a crossfeed valve 33. The crossfeed piping 43 of the second embodiment is different from that of the first embodiment in a connection mode of one end and the other end. The first booster pump 21, the second booster pump 31, and the crossfeed valve 33 function as a supply device that supplies liquid hydrogen to the crossfeed piping 43 at a predetermined flow rate. The controller 6 controls the opening degree of the crossfeed valve 33.

In the second embodiment, the first booster pump 21 and the second booster pump 31 are operated at the same discharge pressure. A pressure difference between pressure P1 and pressure P2 is generated based on the connection positions of one end and the other end of the crossfeed piping 43. The one end of the crossfeed piping 43 is connected to the first supply piping 41 at a position of a piping length L1 from the first booster pump 21. The other end of the crossfeed piping 43 is connected to the second supply piping 42 at a position of a piping length L2 from the second booster pump 31. As illustrated in FIG. 7, L1 < L2. In general, the shorter a piping length, the smaller the pressure loss when liquid hydrogen passes. Therefore, according to the connection mode of the crossfeed piping 43 of FIG. 7, the relationship of P1 > P2 can be set, and liquid hydrogen can be allowed to flow through the crossfeed piping 43.

The controller 6 opens the crossfeed valve 33 at a required opening degree when the crossfeed is required. The booster pumps 21 and 31 are operated at the same discharge pressure also when the crossfeed is performed. With this control, as indicated by an arrow A3, the liquid hydrogen discharged from the first tank 2 by the operation of the first booster pump 21 is partially supplied to the crossfeed piping 43 from the first supply piping 41. The liquid hydrogen remaining in the first supply piping 41 is supplied to the first engine 14. The liquid hydrogen discharged from the second tank 3 by the second booster pump 31 indicated by an arrow A4 is supplied to the second engine 15 together with the liquid hydrogen in the path indicated by the arrow A3.

### [Third embodiment]

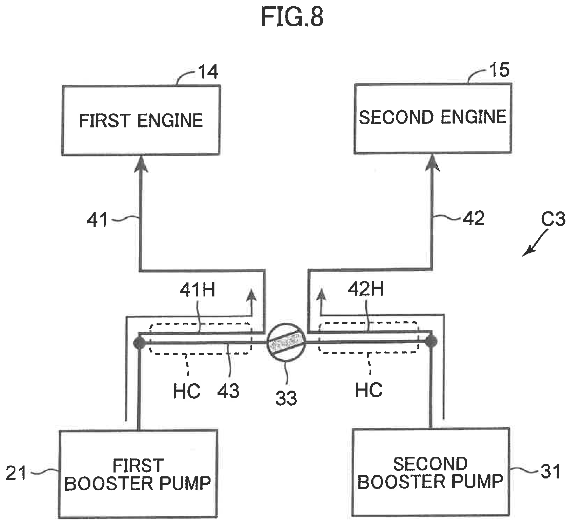

FIG. 8 is a block diagram illustrating a cooling device C3 according to a third embodiment. In the third embodiment, piping to be cooled is crossfeed piping 43. In the third embodiment, an example in which the crossfeed piping 43 is externally cooled will be described. The cooling device C3 includes a first cooling piping portion 41H and a second cooling piping portion 42H. The first cooling piping portion 41H is a part of the first supply piping 41. The second cooling piping portion 42H is a part of the second supply piping 42. A crossfeed valve 33 is opened when the crossfeed is performed.

The first cooling piping portion 41H is additionally installed in a half region of the crossfeed piping 43. That is, the first cooling piping portion 41H and the crossfeed piping 43 are in contact with each other and transfer heat therebetween. The second cooling piping portion 42H is additionally installed in the other half region of the crossfeed piping 43. That is, the second cooling piping portion 42H and the crossfeed piping 43 are in contact with each other and transfer heat therebetween. The first cooling piping portion 41H and the second cooling piping portion 42H constitute an external cooling portion HC for externally cooling the crossfeed piping 43.

When liquid hydrogen is supplied to the first engine 14 via the first supply piping 41 by the operation of the first booster pump 21, the coolness of the liquid hydrogen passing through the first cooling piping portion 41H is transferred to the crossfeed piping 43. When liquid hydrogen is supplied to the second engine 15 via the second supply piping 42 by the operation of the second booster pump 31, the coolness of the liquid hydrogen passing through the second cooling piping portion 42H is transferred to the crossfeed piping 43. Therefore, the crossfeed piping 43 is cooled during the stagnation period. According to the third embodiment, the control configuration for cooling the crossfeed piping 43 can be simplified. Since the crossfeed piping 43 is externally cooled, the target piping can be easily cooled. Further, liquid hydrogen supplied to the first engine 14 and the second engine 15 does not have to be allowed to flow through the crossfeed piping 43 only for cooling.

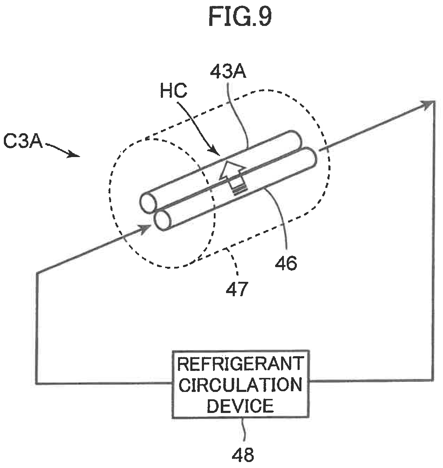

FIG. 9 is a schematic view illustrating a cooling device C3A according to a modification of the third embodiment. The view of FIG. 8 illustrates, as the cooling device C3, an example in which the crossfeed piping 43 is cooled using a part of the first supply piping 41 and the second supply piping 42 used for fuel supply. In the cooling device C3A of FIG. 9, cooling piping 46 prepared separately from the piping used for fuel supply is additionally installed in crossfeed piping 43A. The cooling piping 46 is disposed in parallel with and in contact with the crossfeed piping 43A. The cooling piping 46 may have an additional installation mode where it is wound spirally around an outer peripheral surface of the crossfeed piping 43A. A portion where the crossfeed piping 43A and the cooling piping 46 are in contact with each other is the external cooling portion HC. The external cooling portion HC is covered with a heat insulating material 47.

The cooling piping 46 is connected to circulation piping through which a refrigerant is circulated by a refrigerant circulation device 48. The refrigerant is, for example, liquid helium or liquid hydrogen. When the refrigerant circulation device 48 operates, the refrigerant circulates through the cooling piping 46. In the external cooling portion HC, the coolness of the refrigerant is transferred from the cooling piping 46 to the crossfeed piping 43A. The crossfeed piping 43A is cooled by such a cooling operation.

### [Fourth embodiment]

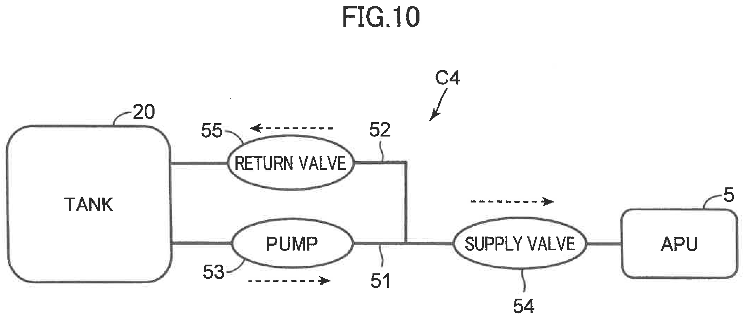

FIG. 10 is a block diagram illustrating a cooling device C4 according to a fourth embodiment. In the fourth embodiment, the piping to be cooled is an APU supply piping 51 that supplies liquid hydrogen to an APU 5. The APU supply piping 51 connects a tank 20 storing liquid hydrogen and the APU 5 as a power unit that consumes the liquid hydrogen. A pump 53 for feeding liquid hydrogen and a supply valve 54 are disposed in the APU supply piping 51. The APU supply piping 51 is piping through which liquid hydrogen circulates when the APU 5 is used, and that has a stagnation period.

The cooling device C4 includes return piping 52 with a return valve 55. The return piping 52 branches from the APU supply piping 51 between the pump 53 and the supply valve 54 and is connected to the tank 20. That is, a circulation path of liquid hydrogen includes a path leading to the APU 5 via the APU supply piping 51 and a path returning from an intermediate portion of the APU supply piping 51 to the tank 20 via the return piping 52.

During operation of the APU 5, the controller opens the supply valve 54 and closes the return valve 55. By these operations of the valves and the operation of the pump 53, liquid hydrogen in the tank 20 is supplied to the APU 5 via the APU supply piping 51. On the other hand, during non-operation of the APU 5, the controller closes the supply valve 54 and opens the return valve 55. By these operations of the valves and the operation of the pump 53, the liquid hydrogen in the tank 20 circulates so as to return to the tank 20 via the APU supply piping 51 and the return piping 52. Therefore, also when the APU 5 is not in operation, the return piping 52 is cooled by the circulation of liquid hydrogen. Note that the supply valve 54 is desirably disposed as close as possible to the APU 5, and much of the APU supply piping 51 is incorporated in the circulation route. Further, when the APU 5 is in operation, the liquid hydrogen may be partially allowed to flow in the return piping 52 to cool the return piping 52.

The functions of the elements disclosed in this specification can be implemented using a circuit or a processing circuit including a general-purpose processor, a special-purpose processor, an integrated circuit, an application specific integrated circuit (ASIC), conventional circuitry, and/or combinations thereof configured to or programmed to implement the disclosed functions. A processor is considered a processing circuit or a circuit because it includes transistors and other circuits. In the present disclosure, the circuit, unit, or means is hardware that implements the recited functions or is hardware programmed to implement the recited functions. The hardware may be the hardware disclosed in this specification or may be other known hardware that is programmed or configured to implement the recited functions. When the hardware is a processor considered as a type of circuit, the circuit, means, or unit is a combination of hardware and software, and the software is used for a configuration of hardware and/or a processor.

### [Summary of the present disclosure]

The specific embodiments described above include the disclosure having the following configurations.

A hydrogen aircraft according to first aspect of the present disclosure is a hydrogen aircraft utilizing hydrogen as fuel for a power unit, the hydrogen aircraft including target piping for transportation of liquid hydrogen, the target piping having a stagnation period during which liquid hydrogen does not substantially flow while the hydrogen aircraft is in operation, and a cooling device that cools the target piping.

According to the first aspect, the target piping having the stagnation period can be cooled by the cooling device. By cooling the target piping during the stagnation period, boiling of liquid hydrogen can be suppressed when the target piping is switched from a stagnation state to a use state. Therefore, fuel supply in the hydrogen aircraft can be stabilized.

According to a second aspect, the hydrogen aircraft from the first aspect further includes a first tank and second tank storing liquid hydrogen, and communication piping that allows the first tank and the second tank to communicate with each other, wherein the target piping is the communication piping.

According to the second aspect, disposing of the communication piping makes it possible to achieve the transportation of liquid hydrogen between the first tank and the second tank, sharing of a transportation target of liquid hydrogen, and the like can be achieved. Further, setting the communication piping as a cooling target makes it possible to respond to a sudden request for using the communication piping.

According to a third aspect, the hydrogen aircraft from the second aspect further includes a first engine and second engine for propulsion of the hydrogen aircraft, first supply piping for supply of liquid hydrogen from the first tank to the first engine, second supply piping for supply of liquid hydrogen from the second tank to the second engine, and crossfeed piping that allows the first supply piping and the second supply piping to communicate with each other, wherein the communication piping is the crossfeed piping.

According to the third aspect, the crossfeed piping is to be cooled. Therefore, in a case where crossfeed using a crossfeed piping is required between the first tank and the second tank, the crossfeed piping can be immediately operated even if the crossfeed piping is stagnant until then.

According to a fourth aspect, in the hydrogen aircraft from the first to third aspects, the cooling device externally cools the target piping.

According to the fourth aspect, since the target piping is externally cooled, the target piping can be easily cooled. In addition, liquid hydrogen assumed to be transported to a predetermined portion does not have to be used for cooling the target piping.

According to a fifth aspect, in the hydrogen aircraft from the fourth aspect, the cooling device includes cooling piping, and between the cooling piping and the target piping, heat exchange is performed.

According to the fifth aspect, the target piping can be cooled only by placing the cooling piping along the target piping. Therefore, the control for cooling the target piping and the device configuration can be simplified.

According to a sixth aspect, the hydrogen aircraft from the first to third aspects further includes a tank storing liquid hydrogen, wherein the cooling device includes a supply device that supplies the liquid hydrogen from the tank to the target piping at a predetermined flow rate.

According to the sixth aspect, the target piping can be internally cooled by utilizing the liquid hydrogen stored in the tank. Therefore, a new device for cooling the target piping does not have to be additionally installed.

According to a seventh aspect, in the hydrogen aircraft from second to fifth aspects, the cooling device includes a supply device that supplies the liquid hydrogen from the first tank or the second tank to the target piping at a predetermined flow rate.

According to the seventh aspect, the target piping can be internally cooled by utilizing the liquid hydrogen stored in the first tank or the second tank.

According to an eighth aspect, the hydrogen aircraft from the sixth or seventh aspect further includes a control device that controls the supply device, and repeats start and stop of supply of liquid hydrogen to the target piping at predetermined time intervals during the stagnation period.

According to the eighth aspect, liquid hydrogen is periodically supplied to the target piping in a stagnating state. Therefore, the target piping can be reliably cooled.

According to a ninth aspect, the hydrogen aircraft from the sixth or seventh aspect further includes a control device that controls the supply device, and supplies liquid hydrogen to the target piping when liquid hydrogen does not flow in the target piping for a predetermined period.

According to the ninth aspect, the liquid hydrogen is supplied to the target piping at a stage where continuously the liquid hydrogen does not flow to the target piping and cooling is actually required. Conversely, the liquid hydrogen is not supplied to the target piping at a stage where cooling is not required. Therefore, liquid hydrogen can be efficiently used.

According to a tenth aspect, the hydrogen aircraft from the sixth or seventh aspect further includes a control device that controls the supply device, and supplies liquid hydrogen to the target piping at a flow rate lower than a flow rate in a case where the target piping is in operation during the stagnation period.

According to the tenth aspect, when the target piping is in the stagnation state, a small amount of liquid hydrogen constantly flows in the target piping. Therefore, the target piping can be reliably cooled.

According to an eleventh aspect, the hydrogen aircraft from the first to tenth aspects further includes a tank for storing liquid hydrogen, a power unit that consumes the liquid hydrogen supplied from the tank, supply piping including the target piping and connecting the tank with the power unit, and return piping branching from the supply piping and connected to the tank.

According to the eleventh aspect, since the return piping is provided, the liquid hydrogen used for cooling the target piping can be returned to the tank. Since the liquid hydrogen returned to the tank can be supplied to the power unit again, the availability of the liquid hydrogen can be enhanced.

A method for cooling piping according to a twelfth aspect is a method for cooling target piping for transportation of liquid hydrogen, the target piping being included in a hydrogen aircraft utilizing hydrogen as fuel for a power unit, the method including specifying a stagnation period during which liquid hydrogen does not substantially flow in the target piping while the hydrogen aircraft is in operation and supplying liquid hydrogen for cooling to the target piping at predetermined time intervals for a predetermined period during the stagnation period.

According to the twelfth aspect, the target piping for which the stagnation period is specified is cooled at predetermined time intervals for a predetermined time period by supplying liquid hydrogen. By cooling the target piping during the stagnation period, boiling of liquid hydrogen can be suppressed when the target piping is switched from a stagnation state to a use state. Therefore, fuel supply in the hydrogen aircraft can be stabilized.

A method for cooling piping according to a thirteenth aspect, in the method from the twelfth aspect, the hydrogen aircraft includes a first engine and a second engine for propulsion of the hydrogen aircraft, first supply piping for supply of liquid hydrogen from a first tank to the first engine, second supply piping for supply of liquid hydrogen from a second tank to the second engine, and crossfeed piping for communication between the first supply piping and the second supply piping, and to the crossfeed piping, liquid hydrogen for cooling is supplied at predetermined time intervals for a period during which crossfeed using the crossfeed piping is not performed.

According to the thirteenth aspect, the crossfeed piping is to be cooled. Therefore, in a case where crossfeed using a crossfeed piping is required between the first tank and the second tank, the crossfeed piping can be immediately operated even if the crossfeed piping is stagnant until then.

## Claims

1. A hydrogen aircraft utilizing hydrogen as fuel for a power unit, the hydrogen aircraft comprising:
target piping for transportation of liquid hydrogen, the target piping having a stagnation period during which liquid hydrogen does not substantially flow while the hydrogen aircraft is in operation; and
a cooling device that cools the target piping.

2. The hydrogen aircraft according to claim 1, further comprising:
a first tank and second tank storing liquid hydrogen; and
communication piping that allows the first tank and the second tank to communicate with each other,
wherein the target piping is the communication piping.

3. The hydrogen aircraft according to claim 2, further comprising:
a first engine and second engine for propulsion of the hydrogen aircraft;
first supply piping for supply of liquid hydrogen from the first tank to the first engine;
second supply piping for supply of liquid hydrogen from the second tank to the second engine; and
crossfeed piping that allows the first supply piping and the second supply piping to communicate with each other, wherein the communication piping is the crossfeed piping.

4. The hydrogen aircraft according to claim 1, further comprising
a tank storing liquid hydrogen, wherein
the cooling device includes a supply device that supplies the liquid hydrogen from the tank to the target piping at a predetermined flow rate.

5. The hydrogen aircraft according to claim 2 or 3, wherein
the cooling device includes a supply device that supplies the liquid hydrogen from the first tank or the second tank to the target piping at a predetermined flow rate.

6. The hydrogen aircraft according to claim 4 or 5, further comprising a control device that controls the supply device, and repeats stan and stop of supply of liquid hydrogen to the target piping at predetermined time intervals during the stagnation period.

7. The hydrogen aircraft according to claim 4 or 5, further comprising a control device that controls the supply device, and supplies liquid hydrogen to the target piping when liquid hydrogen does not flow in the target piping for a predetermined period.

8. The hydrogen aircraft according to claim 4 or 5, further comprising a control device that controls the supply device, and supplies liquid hydrogen to the target piping at a flow rate lower than a flow rate in a case where the target piping is in operation during the stagnation period.

9. The hydrogen aircraft according to claim 1, further comprising:
a tank for storing liquid hydrogen;
a power unit that consumes the liquid hydrogen supplied from the tank;
supply piping including the target piping and connecting the tank with the power unit; and
return piping branching from the supply piping and connected to the tank.

10. A method for cooling target piping for transportation of liquid hydrogen, the target piping being included in a hydrogen aircraft utilizing hydrogen as fuel for a power unit, the method comprising:
specifying a stagnation period during which liquid hydrogen does not substantially flow in the target piping while the hydrogen aircraft is in operation; and
supplying liquid hydrogen for cooling to the target piping at predetermined time intervals for a predetermined period during the stagnation period.

11. The method according to claim 10, wherein
the hydrogen aircraft includes a first engine and second engine for propulsion of the hydrogen aircraft, first supply piping for supply of liquid hydrogen from a first tank to the first engine, second supply piping for supply of liquid hydrogen from a second tank to the second engine, and crossfeed piping for communication between the first supply piping and the second supply piping, and
wherein to the crossfeed piping, liquid hydrogen for cooling is supplied at predetermined time intervals for a period during which crossfeed using the crossfeed piping is not performed.
